# EUROPÄISCHE PATENTSCHRIFT

(11) **EP 1 431 260 B1**
(45) Veröffentlichungstag und Bekanntmachung des Hinweises auf die Patenterteilung: **16.06.2010**
(21) Anmeldenummer: 03028352.7
(22) Anmeldetag: 10.12.2003
(51) Int. Cl.: C04B 35/83, C04B 38/00, C04B 41/88, C04B 35/573, F16D 69/02

(54) **Verfahren zur Herstellung von Hohlkörpern aus faserverstärkten keramischen Materialien**
Method of production of hollow bodies out of fibre reinforced ceramic materials
Procédé de fabrication des corps creux de matériaux céramiques à renfort de fibres

(30) Priorität: 20.12.2002 DE 10260923
(43) Veröffentlichungstag der Anmeldung: 23.06.2004
(73) Patentinhaber: AUDI AG, 85045 Ingolstadt (DE)
(72) Erfinder: Sommer, Arno, 86399 Bobingen (DE); Huber, Dieter, 86154 Augsburg (DE); Straub, Dunja, 86609 Donauwörth (DE)
(74) Vertreter: Deckers, Hellmuth Alexander

(56) Entgegenhaltungen:
- WO-A-96/13470
- DE-C- 10 148 658
- DE-C- 10 148 659

## Beschreibung

Die vorliegende Erfindung bezieht sich auf ein Verfahren zur Herstellung von Hohlkörpern aus faserverstärkten keramischen Materialien. Insbesondere betrifft die Erfindung ein Verfahren zur endkonturnahen Herstellung eines porösen faserverstärkten Kohlenstoff-haltigen Formkörpers mit Ausnehmungen oder Hohlräumen, insbesondere eines faserverstärkten C/C-Körpers (mit Kohlenstoffasern verstärkter Kohlenstoff, englisch "CFC" oder "CFRC", carbon fibre reinforced carbon), der aus binderhaltigen Faserstoffmassen mittels eines Preßvorganges unter Verwendung von Preßkernen geformt und in einer nachfolgenden thermischen Behandlung zu einem C/C-Körper umgesetzt wird, sowie gegebenenfalls die Nachverdichtung dieses porösen faserverstärkten Kohlenstoff-haltigen Formkörpers unter Ausbildung einer keramischen Matrix, insbesondere durch eine Flüssigmetall-Infiltration in den C/C-Körper, gegebenenfalls mit anschließender Wärmebehandlung, wobei die Matrix dann Metalle und die durch Reaktion mit dem Kohlenstoff gebildeten Metallcarbide sowie gegebenenfalls Reste von nicht umgesetztem Kohlenstoff enthält.

Unter "Metallen" werden hier alle Elemente verstanden, die Carbide bilden, die bei Raumtemperatur fest sind, also auch insbesondere Silicium.

Das erfindungsgemäße Verfahren betrifft insbesondere die Herstellung von mit Kohlenstoffasern verstärkten keramischen Verbundwerkstoffen mit Ausnehmungen und Hohlräumen, welche über die Flüssigmetallinfiltration mit Siliciumschmelzen unter Reaktion zumindest eines Teils des Kohlenstoffs zu Siliciumcarbid in mit Kohlenstoffasern verstärkte Verbundwerkstoffe mit SiC-haltiger oder Kohlenstoff- und SiC-haltiger Matrix (C/SiC- oder C/C-SiC-Werkstoffe) umgesetzt werden. Anwendung finden diese Verbundwerkstoffe insbesondere bei Brems-, Kupplungs- und Reibscheiben, sowie als hochtemperaturbeständige Konstruktionswerkstoffe.

Verfahren zur Herstellung von C/SiC-Bauteilen sind beispielsweise aus der Patentanmeldung DE-A 197 10 105 bekannt und umfassen unter anderem die folgenden Schritte :
- Herstellen einer preßfähigen Mischung aus Kohlenstoff-haltigen Fasern oder Faserbündeln (gemeinsam nachfolgend als "Faserstoff" bezeichnet), wobei die Fasern mit einer Beschichtung überzogen sein können, einerseits und Füllmitteln und/oder Bindemitteln wie beispielsweise Harzen und/oder Pech andererseits,
- Formgebung der preßfähigen Mischung unter Druck und Temperatur und Carbonisierung der Kohlenstoff-haltigen Füll- und Bindemittel zur Herstellung eines Formkörpers, insbesondere eines aus mit Kohlenstoffasern verstärktem Kohlenstoff bestehenden Formkörpers (C/C) und gegebenenfalls Graphitierung des Formkörpers,
- Infiltrieren zumindest einer Randschicht des Formkörpers mit einer Silicium-Schmelze und zumindest partielle Reaktion des Siliciums mit dem Kohlenstoff im Formkörper zu SiC, wobei sich ein Formkörper bildet, der wenigstens in der Randschicht aus einer Verbundkeramik mit in einer Matrix aus überwiegend SiC, Si und C eingebetteten, Kohlenstoff-haltigen Fasern besteht (hier ebenfalls als C/SiC bezeichnet).

Im folgenden soll unter C/SiC allgemein auch die Werkstoffvariante verstanden werden, bei der wie oben beschrieben nur eine Randschicht siliciert wird.

Heutige metallische Bremsscheiben besitzen häufig von Luft durchströmte Lüftungsschlitze oder - kanäle innerhalb der Scheibe, um das Temperaturniveau der Scheibe zu reduzieren und den Verschleiß der Reibbeläge bei hoher Belastung zu senken. Derartige Lüftungskanäle werden auch bei Bremsscheiben auf C/SiC-Basis ausgebildet, besonders um das Temperaturniveau mit Rücksicht auf die Bremsbeläge und weitere Systemkomponenten zu senken.

Ein Verfahren zur Herstellung von Reibeinheiten aus C/C-SiC-Werkstoff mit Lüftungskanälen, Hohlräumen und Ausnehmungen, bei dem ein endkonturnah strukturierter poröser Kohlenstoffkörper mit flüssigem Silicium infiltriert wird, ist aus der EP-B 0 788 468 bekannt. Dieses Verfahren nutzt den Umstand, daß sich die Siliciumflüssiginfiltration und Ausbildung der Si- und SiC-reichen Verbundwerkstoff-Matrix nahezu ohne Geometrieänderung des C/C-Vorkörpers vollzieht, so daß die Hohlräume und Ausnehmungen bereits im relativ weichen und gut zu bearbeitenden C/C-Vorkörper angelegt werden können und nicht erst in der sehr harten C/C-SiC-Verbundkeramik. Unter anderem wird vorgeschlagen, die Hohlräume und Ausnehmungen durch lösliche Kerne aus Schaumpolystyrol oder andere Hartschäume, durch pyrolysierbare Kerne aus Polyvinylalkohol, oder durch entnehmbare Kerne aus Gummi, Metall oder Keramik zu bilden. Das Material der Kerne bildet die Lüftungskanäle der Reibeinheit ab, wobei die Stege zwischen den einzelnen Lüftungskanälen durch entsprechende Aussparungen innerhalb des Kernmaterials vorgegebenen werden.

In der deutschen Patentanmeldung DE-A 102 34 400 wird ein Verfahren zur Herstellung von Hohlkörpern angegeben, bei dem Kerne aus kompressiblen Materialien eingesetzt werden, die in Preßrichtung beim Pressen um mindestens 5 % ihrer Länge gestaucht werden. Dabei können die Kerne aus mehreren Schichten aufgebaut sein, wobei die äußeren (Deck-)Schichten steif und die innere Schicht kompressibel sind.

Dies Verfahren erlaubt zwar eine bessere Verdichtung der preßfähigen Mischung im Bereich der Stege des gepreßten Körpers, die an der Stelle der Aussparungen in den Kernen gebildet werden. Es hat sich jedoch herausgestellt, daß sowohl bei der einschichtigen Ausführungsform als auch bei der beschriebenen mehrschichtigen Ausführungsform mit einer kompressiblen Schicht im Inneren und steifen Deckschichten durch die Kompression des Kernmaterials auf die Seiten der Stege ein Druck ausgeübt wird, der insbesondere im Fall von schmalen Stegen und breiten Aussparungen zu unerwünschten Verformungen führen kann.

Aufgabe der Erfindung ist es daher, ein Verfahren bereitzustellen und ein daran angepaßtes Kernmaterial zu entwickeln, durch welches faserverstärkte keramische Hohlkörper erhältlich sind, die eine einheitliche Verdichtung im gesamten Körper aufweisen, und bei denen auch schmale Stege mit einstellbarer Kontur im Inneren ohne Deformationen ausgeführt werden können. Die Kerne sollen weiter so sein, daß sie in einfacher Weise schonend aus dem Hohlkörper entfernbar sind.

Die Aufgabe wird erfindungsgemäß dadurch gelöst, daß für ein Preßverfahren mit einem die gesamte Fläche des Preßlings erfassenden Preßstempel kompressible Kerne bereitgestellt werden, die zumindest in der Richtung der Verfahrwege der Preßstempel beim Preßvorgang eine Längenänderung von mindestens 5 % erfahren, wobei die Kerne aus einem Material bestehen, das bei der weiteren thermischen Behandlung des faserhaltigen Vorkörpers entweder vollständig pyrolysiert werden, oder unter Volumenschwindung zumindest teilweise zersetzt werden, wobei die Kerne in der Preßrichtung mindestens drei Schichten aufweisen, wobei die sich Kompressibilität von unmittelbar benachbarten Schichten voneinander unterscheidet, und die Kompressibilität in den äußersten Schichten bevorzugt untereinander gleich ist und mindestens doppelt so groß ist wie die in der inneren Schicht.

Die Erfindung betrifft daher ein Verfahren zur Herstellung von Hohlkörpern aus faserverstärkten keramischen Materialien, wobei
- im ersten Schritt kompressible Kerne hergestellt werden, deren Form zumindest in der Ebene senkrecht zur Preßrichtung im wesentlichen der Geometrie der zu bildenden Hohlräume entspricht,
- im zweiten Schritt ein Grünkörper hergestellt wird, indem in eine Form die genannten kompressiblen Kerne und eine preßfähige Bindemittel und Faserstoff enthaltende Masse gefüllt werden,
- im dritten Schritt die faserstoffhaltige Masse verpreßt wird, wobei der Kern in Preßrichtung um mindestens 5 % seiner Ausdehnung in Preßrichtung komprimiert wird,
- im vierten Schritt die faserstoffhaltige Masse ausgehärtet wird, bevorzugt durch Erwärmen auf eine Temperatur von 120 °C bis 280 °C, wobei der dritte und vierte Schritt auch gleichzeitig oder zeitlich teilweise überlappend ausgeführt werden können,
- im fünften Schritt der auch als Vorkörper bezeichnete verfestigte Grünkörper durch Erhitzen in einer nicht oxydierenden Atmosphäre auf eine Temperatur von ca. 750 °C bis ca. 1100 °C zu einem C/C-Körper carbonisiert wird, und gegebenenfalls
- im sechsten Schritt der C/C-Körper unter Erhalt seiner Form mit einem flüssigen Metall infiltriert wird, wobei zumindest teilweise eine Reaktion des Kohlenstoff-Anteils der Matrix des C/C-Körpers mit dem Metall unter Bildung von Carbiden abläuft,
wobei die Kerne aus Material bestehen, das im fünften Schritt pyrolysiert, oder unter Volumenschwindung zumindest teilweise pyrolysiert wird, und die Kerne in der Preßrichtung mindestens drei Schichten aufweisen, wobei sich die Kompressibilität von unmittelbar benachbarten Schichten voneinander unterscheidet, und die Kompressibilität der inneren Schicht geringer als die der äußeren Schichten ist.

Die Kompressibilität des Materials der inneren (mittleren) Schicht ist um mindestens 5 %, bevorzugt um mindestens 10 %, und insbesondere um mindestens 15 % geringer als die des Materials einer äußeren Schicht. Bevorzugt ist die Kompressibilität in den äußersten Schichten untereinander gleich und mindestens doppelt so groß wie die in der inneren (mittleren) Schicht.

Dabei wird eine Masse als "preßfähig" bezeichnet, wenn sie nach Verdichten im Preßvorgang nach dem Entspannen ihre Form behält und nicht ohne weiteres zerbröselt.

Die gemäß diesem Verfahren hergestellten faserverstärkten keramischen Hohlkörper zeichnen sich dadurch aus, daß sie im Bereich der Stege eine Faserstoffdichte innerhalb des Materials aufweisen, die nicht geringer als die in den Schichten darüber und darunter ist, daß der Werkstoff homogen ist und keine Phasengrenzen am Übergang zwischen der Kernzone und den angrenzenden Werkstoffschichten zu erkennen sind.

Erfindungsgemäß wird dies dadurch erreicht, daß in diesem Verfahren kompressible Kerne eingesetzt werden, die beim Preßvorgang in Preßrichtung zusammengedrückt oder komprimiert werden, wobei die Kerne in der Preßrichtung mindestens drei Schichten mit Materialien unterschiedlicher Kompressibilität aufweisen, und die Kompressibilität des Materials der inneren Schicht geringer als die des Materials der äußeren Schichten ist. Die Dickenänderung in Preßrichtung ist durch Material und Geometrie des Kerns gezielt einstellbar. Während des Preßvorgangs wird der kompressible Kern bis auf eine zuvor bestimmbare Dicke zusammengefahren, dadurch ist in den Aussparungen in den Kernen das Verdichtungsverhältnis der preßfähigen Masse einstellbar.

Bevorzugt sind solche Kerne, die sich während des Pressens um mindestens 5 % bezogen auf deren Ausgangsdicke in Preßrichtung zusammenpressen bzw. komprimieren lassen. Die Rückfederkraft des Materials ist dabei bevorzugt so gering, daß der ausgehärtete Grünling beim Entspannen nicht geschädigt werden kann. Aus diesem Grund sind beispielsweise Elastomere oder Gummi als Kernmaterial nicht geeignet.

Die lineare Kompressibilität der erfindungsgemäßen Kerne, also die relative Längenänderung in Richtung des Verfahrweges des Preßstempels, liegt bei mindestens 5 % der Ausgangsdicke. Bevorzugt werden die Kerne auf 2 bis 80 % und besonders bevorzugt auf 5 bis 75 % ihrer Ausgangsdicke in Preßrichtung komprimiert.

Dabei wird die Festigkeit der Kerne so gewählt, daß ein Preßdruck im Bereich von 0,1 bis 50 MPa zum Erreichen der gewünschten Kompression oder Stauchung ausreicht.

Gemäß einer Ausführungsform der Erfindung werden die Kerne aus schmelzbaren Materialien hergestellt, die aus thermoplastischen und rückstandsfrei pyrolysierbaren Polymeren (Kunststoffen) ausgewählt sind, im weiteren auch Thermoplastkerne genannt. Bevorzugt wird das thermoplastische Material für die innere Schicht des Kerns so gewählt, daß dessen Schmelzpunkt oberhalb der Härtungstemperatur des Formgebungsverfahrens für den Grünkörper, typischerweise im Bereich von 120 bis 300 °C, aber deutlich unterhalb der Carbonisierungstemperatur der gepreßten und ausgehärteten Grünkörper liegt. Üblicherweise liegt der Schmelzpunkt bei mindestens 150 °C, bevorzugt bei mindestens 180 °C und besonders bevorzugt zwischen 220 °C und 280 °C. Erfolgt die thermische Aushärtung der preßfähigen Mischung aber erst nach dem Zusammenfahren der Presse auf das Endmaß, so können auch solche Kernmaterialien eingesetzt werden, die bei oder unterhalb der Härtungstemperatur schmelzen oder auch zersetzt werden, da die preßfähige Masse dann bereits ihre Endkontur angenommen hat. Werden als Binder für die preßfähigen Mischungen Phenolharze gewählt, so liegt der Schmelzpunkt des Thermoplasten beispielsweise bevorzugt über 150 °C. Für die bevorzugte Preßformgebung und Heiß-Härtung der Binder werden an den Thermoplastkern hohe Anforderungen an die Wärmeformbeständigkeit gestellt. Die Wärmeformbeständigkeitstemperatur (bestimmt gemäß ISO 75A) liegt üblicherweise oberhalb von 80 °C, besonders bevorzugt bei mindestens 150 °C. Die Härte (Kugeldruckhärte) des Thermoplasten sollte mindestens 30 MPa betragen.

Werden als Material für die Kerne thermoplastische Kunststoffe eingesetzt, so erfolgt die Herstellung der Kerne bevorzugt über ein Spritzgußverfahren. Allgemein eignen sich die bekannten Formungsverfahren, wie Kalt- oder Heiß-Pressen, Guß, Druckguß oder spanende Bearbeitung, je nach eingesetztem Material.

Erfindungsgemäß weisen die Kerne in Preßrichtung mindestens drei Schichten mit unterschiedlicher Kompressibilität auf, wobei bevorzugt die Materialien der äußeren Schichten und damit ihre Kompressibilität einander gleich sind. Vorteilhafte Materialien für die äußeren Schichten mit höherer Kompressibilität sind geschäumte Polymere. Geeignet sind Schäume aus Polystyrol, Polyurethanen, Polyolefinen wie Polyäthylen und Polypropylen oder deren Copolymeren, und Polymethacrylimiden wie Poly-(N-Methylmethacrylimid). Für die innere Schicht mit geringerer Kompressibilität werden bevorzugt thermoplastische Polymere eingesetzt, insbesondere diejenigen, welche sich rückstandsfrei pyrolysieren lassen. Besonders geeignete Polymere sind Polystyrol und SAN, Polyamide (PA) wie PA 66, Polycarbonat und Polyestercarbonat, aromatische Polyester (Polyarylate), Polyimide (PI) wie Polyätherimid (PEI) oder modifiziertes Polymethacrylimid (Poly-(N-Methyh-nethacrylimid), PMMI), Polyoxymethylen (POM) und Polyterephthalate (PETP, PBTP) sowie Copolymere der genannten Polymere.

Dabei betragen die Schichtdicken in Preßrichtung im Fall von drei Schichten für die äußeren Schichten bevorzugt jeweils 10 bis 40 %, und für die innere Schicht 20 bis 80 % der Gesamtdicke des Kerns in Preßrichtung, besonders bevorzugt für die äußeren Schichten jeweils 15 bis 35 %, und für die innere Schicht 30 bis 70 %, insbesondere für die äußeren Schichten jeweils 20 bis 30 %, und für die innere Schicht 40 bis 60 % der Gesamtdicke des Kerns in Preßrichtung. Beim Pressen werden die kompressiblen äußeren Schichten auf 1/10 bis 1/200 ihrer ursprünglichen Dicke, bevorzugt auf 1/12 bis 1/100, und insbesondere auf 1/15 bis 1/80 ihrer ursprünglichen Dicke komprimiert, wobei eine weitere Abnahme der Dicke auch durch das Schmelzen des Materials der äußeren Schichten bei Erwärmen der Form während des Preßvorgangs verursacht werden kann.

Neben den rückstandsfrei bei Temperaturen von mindestens 750 °C pyrolysierenden Polymeren sind für die innere Schicht auch diejenigen geeignet, die nur teilweise pyrolysiert oder carbonisiert werden, sofern hierbei eine wesentliche (mindestens 50 %) Volumenschwindung stattfindet. Zu diesen Polymeren gehören unter anderem Duroplaste, wie Phenolharze beziehungsweise aus diesen gebildete Hartschäume. Es ist auch möglich, Mischungen von Materialien für die innere Schicht der Kerne zu verwenden, von denen ein Teil rückstandsfrei pyrolysiert, und ein anderer Teil bei der Pyrolyse seine ursprüngliche Form soweit verliert, daß er in Form eines losen Pulvers oder unzusammenhängender Körner vorliegt.

Das erfindungsgemäße Verfahren sieht vor, daß im zweiten Schritt preßfähige Massen aus Kohlenstoffasern, thermisch aushärtbaren Bindern, und - insbesondere Kohlenstoff-haltigen - Zuschlagstoffen gemeinsam mit den oben beschriebenen Kernen in die Preßform gefüllt werden. Dabei wird die Geometrie des gebildeten Körpers festgelegt.

Bevorzugt werden die Kohlenstoffaserschichten des C/C-Vorkörpers in der Nähe des Kerns in vorgegebener Vorzugsrichtung der Kohlenstoff-Verstärkungsfasern auf den Kern aufgebaut. Hierfür werden bevorzugt solche preßfähigen Massen verwendet, die Kohlenstoffasern mit einer mittleren Länge von mindestens 5 mm enthalten. Besonders bevorzugt sind preßfähige Massen, die Kohlenstoffasern in Form von Kurzfaserbündeln mit einer mittleren Länge von höchstens 50 mm enthalten, und wobei die Fasern eine Beschichtung aus pyrolytischem Kohlenstoff aufweisen, der durch Carbonisieren von Polymeren, Harzen oder Pechen gebildet ist. Bevorzugt wird dann die preßfähige Masse so in die Form gefüllt, daß die Kohlenstoffasern überwiegend parallel zur Richtung der höchsten Zugbeanspruchung des resultierenden Formteils orientiert sind. Überwiegend bedeutet in diesem Zusammenhang mindestens 50 %. Es ist auch möglich, die Kerne mit parallel gelegten und gebunden Kohlenstoffäden (englisch "tapes" oder "UDT" = unidirectional tapes genannt) zu umwickeln, und diese Hülle gegebenenfalls mit thermisch aushärtbaren Bindern zu fixieren. Auf diese Schicht vorzugsorientierter Kohlenstoffasern oder Fäden werden dann üblicherweise weitere preßfähige Massen mit geringerer Faser- oder Faserbündellänge geschichtet.

In einer anderen bevorzugten Ausführungsform werden Kohlenstoffasern in Form von beschichteten Kurzfaserbündeln eingesetzt. Besonders bevorzugt sind hierbei mit graphitiertem Kohlenstoff beschichtete Fasern, beziehungsweise Faserbündel mit mittleren Längen unterhalb von 5 mm.

Als thermisch aushärtbare Binder werden Peche wie Kohlenteerpech oder Erdölpech und/oder bevorzugt härtbare Harze wie Phenolharze, Epoxidharze, Polyimide, füllstoffhaltige Mischungen mit Furfurylalkohol oder Furanharze eingesetzt. Die Massen werden hierzu in eine Preßform eingefüllt, wobei in der Form verlorene Kerne wie oben beschrieben vorgesehen werden. Die Kerne nehmen den Raum der später in der Verbundkeramik zu bildenden Hohlräume oder Aussparungen ein.

Im dritten Schritt wird die Form nach dem Befüllen mit Hilfe der Preßstempel mit dem erforderlichen Druck beaufschlagt und die Masse wird zu Grünkörpern verpreßt, die die genannten Kerne enthalten.

Im vierten Schritt wird der gepreßte Körper unter Temperatureinwirkung ausgehärtet. Die Härtung kann separat, also nach dem Pressen erfolgen, beispielsweise in einem Ofen. Es ist auch möglich, in einer beheizbaren Presse die Härtung bereits während des Verpressens gleichzeitig mit diesem oder mit einer Verzögerung zu beginnen. Beim Härten in der Form werden weniger Anforderungen an das Zusammenhalten des gepreßten, aber noch ungehärteten Körpers gestellt.

Nach der Härtung wird der verfestigte Grünkörper im fünften Schritt mitsamt dem Kern in den C/C-Zustand überführt, das heißt carbonisiert. Dies geschieht im allgemeinen durch Erhitzen unter Schutzgas (Stickstoff) oder im Vakuum auf Temperaturen im Bereich von ca. 750 °C bis 1100 °C. Wird auf Temperaturen oberhalb von ca. 1800 °C erhitzt, findet zusätzlich eine Graphitierung des Kohlenstoffs statt.

Nach der Carbonisierung des Grünkörpers werden gegebenenfalls angefallene Pyrolyse-, beziehungsweise Kohlenstoffreste in den durch Zersetzung der Kerne gebildeten Hohlräumen beseitigt und es wird ein poröser C/C-Körper mit Hohlräumen oder Ausnehmungen erhalten, der sich weiterverwerten läßt. Er kann nachbearbeitet oder wiederum zu komplexeren Strukturen zusammengesetzt oder geklebt werden.

In einer bevorzugten Ausführungsform des erfindungsgemäßen Verfahrens wird der Kohlenstoff des C/C-Körpers im sechsten Schritt durch eine Schmelzinfiltration mit Metallen und die gegebenenfalls anschließende Wärmebehandlung zumindest teilweise zu den entsprechenden Carbiden umgesetzt. Bevorzugt ist die Schmelzinfiltration mit Silicium, wobei sich zumindest ein Teil des Kohlenstoffs (bevorzugt der Kohlenstoff in der Matrix) zu Siliciumcarbid umsetzt; die Matrix enthält dann SiC, nicht umgesetzten Kohlenstoff sowie nicht umgesetztes Silicium. Hierzu wird der C/C-Körper mit Siliciumpulver überschichtet und auf Temperaturen von ca. 1500 bis ca. 1800 °C im Vakuum erhitzt. Je nach beabsichtigter Verwendung ist es dabei nicht zwingend notwendig, den gesamten C/C-Körper in C/SiC umzusetzen, im allgemeinen wird aber zumindest die Randschicht zu C/SiC umgesetzt. Obwohl die Siliciumschmelzinfiltration das bevorzugte Verfahren ist, kann der C/C-Körper auch mit anderen üblichen Verfahren unter Ausbildung der in der Verbundwerkstofftechnologie gängigen Matrices nachverdichtet werden. Insbesondere kann das Flüssigsilicierverfahren auch mit Siliciumlegierungen durchgeführt werden, die unter anderem Metalle wie Chrom, Eisen, Kobalt, Nickel, Titan und/oder Molybdän enthalten können.

Das beschriebene Verfahren kann bevorzugt zur Herstellung von Bremsscheiben oder Kupplungsscheiben verwendet werden. Hierbei werden in eine zylindrische Form die preßfähige Masse sowie mindestens ein Kern gefüllt. Die Dicke der Boden- und Deckschicht (unterhalb bzw. oberhalb der Kernzone) beträgt im Fall von Bremsscheiben nach dem Verpressen vorzugsweise mindestens 5 mm. Diese Schichten bilden die Reibschichten der Brems- oder Kupplungsscheibe. Die Form der Brems- oder Kupplungsscheibe ist bevorzugt die einer Ringscheibe, d. i. der achsennahe Raum ist durchgehend über die gesamte Dicke der Scheibe leer. Die Form und Anordnung des mindestens einen Kerns ist bevorzugt derart, daß die gebildeten Hohlräume von der Peripherie des zylindrischen Formkörpers bis zum inneren Rand des Formkörpers reichen und damit einen offenen Durchgang zwischen dem inneren und äußeren zylindrischen Rand der Ringscheibe bilden. Hierdurch werden innenbelüftete Brems- oder Kupplungsscheiben mit radialen Lüftungskanälen erzeugt.

Die nach dem erfindungsgemäßen Verfahren hergestellten innenbelüfteten Brems- oder Kupplungsscheiben lassen sich für Automobil- und Lastwagenbremsen, für Flugzeuge und Schienenfahrzeuge sowie für Reibungskupplungen in Antrieben aller Art verwenden. So hergestellte Hohlkörper sind ebenfalls als Bauteile im Werkzeug- und Maschinenbau vielseitig verwendbar.

## Patentansprüche

1. Verfahren zur Herstellung von Hohlkörpern aus faserverstärkten keramischen Materialien, wobei
- im ersten Schritt kompressible Kerne hergestellt werden, deren Form zumindest in der Ebene senkrecht zur Preßrichtung im wesentlichen der Geometrie der zu bildenden Hohlräume entspricht,
- im zweiten Schritt ein Grünkörper hergestellt wird, indem in eine Form die genannten kompressiblen Kerne und eine preßfähige Bindemittel und Faserstoff enthaltende Masse gefüllt werden,
- im dritten Schritt die faserstoffhaltige Masse verpreßt wird, wobei der Kern zumindest in Preßrichtung um mindestens 5 % seiner Ausdehnung in Preßrichtung komprimiert wird,
- im vierten Schritt die faserstoffhaltige Masse ausgehärtet wird,
- im fünften Schritt der auch als Vorkörper bezeichnete verfestigte Grünkörper durch Erhitzen in einer nicht oxydierenden Atmosphäre auf eine Temperatur von ca. 750 °C bis ca. 1100 °C zu einem C/C-Körper carbonisiert wird,
wobei die Kerne aus einem Material bestehen, das im fünften Schritt pyrolysiert, oder unter Volumenschwindung zumindest teilweise pyrolysiert wird und die Kerne in der Preßrichtung mindestens drei Schichten aufweisen, wobei die sich Kompressibilität von unmittelbar benachbarten Schichten voneinander unterscheidet, und die Kompressibilität der inneren Schicht geringer als die der äußeren Schichten ist.

2. Verfahren nach Anspruch 1, **dadurch gekennzeichnet, daß** anschließend an den fünften Schritt
- im sechsten Schritt der C/C-Körper unter Erhalt seiner Form mit einem flüssigen Metall infiltriert wird, wobei zumindest teilweise eine Reaktion des Kohlenstoff-Anteils der Matrix des C/C-Körpers mit dem Metall unter Bildung von Carbiden abläuft.

3. Verfahren nach Anspruch 1, **dadurch gekennzeichnet, daß**
- im vierten Schritt die faserstoffhaltige Masse durch Erwärmen auf eine Temperatur von 120 °C bis 280 °C ausgehärtet wird

4. Verfahren nach Anspruch 1, **dadurch gekennzeichnet, daß** der dritte und vierte Schritt gleichzeitig oder zeitlich teilweise überlappend ausgeführt werden.

5. Verfahren nach Anspruch 1, **dadurch gekennzeichnet, daß** die Kerne drei Schichten aufweisen, wobei die Schichtdicken der äußeren Schichten jeweils 10 bis 40 %, und die der inneren Schicht 20 bis 80 % der Gesamtdicke des Kerns in Preßrichtung betragen.

6. Verfahren nach Anspruch 1, **dadurch gekennzeichnet, daß** beim Pressen die kompressiblen äußeren Schichten auf 1 /10 bis 1/200 ihrer ursprünglichen Dicke komprimiert werden.

7. Verfahren nach Anspruch 1, **dadurch gekennzeichnet, daß** die äußeren Schichten der Kerne beim Pressen aufgeschmolzen werden.

8. Hohlkörper aus faserverstärktem keramischen Material erhältlich nach dem Verfahren von Anspruch 1 in Form einer Ringscheibe, bei der mindestens ein Hohlraum von der Peripherie bis zum inneren Rand der Ringscheibe reicht.

9. Verwendung von Hohlkörpern nach Anspruch 8 als Brems- oder Kupplungsscheibe.

## Claims

1. A process for producing hollow bodies comprising fiber-reinforced ceramic materials, which comprises
- in a first step producing compressible cores whose shape corresponds, at least in the plane perpendicular to the pressing direction, essentially to the geometry of the hollow spaces to be formed,
- in a second step producing a green body by introducing the compressible cores mentioned and a pressable composition comprising binder and fiber material into a mold,
- in a third step pressing the composition containing fiber material so that the core is compressed at least in the pressing direction by at least 5 % of its dimension in the pressing direction,
- in a fourth step curing the composition comprising fiber material,
- in a fifth step carbonizing the strengthened green body, also referred to as intermediate body, by heating to a temperature of from about 750 °C to about 1100 °C in a nonoxidizing atmosphere to give a C/C body,
where the cores consist of a material which pyrolyzes in the fifth step or is at least partially pyrolyzed with volume shrinkage and the cores have at least three layers in the pressing direction, with the compressibility of directly adjacent layers differing and the compressibility of the inner layer being lower than that of the outer layers.

2. The process as claimed, in claim 1, wherein, subsequent to the fifth step,
- the C/C body is in a sixth step infiltrated with a liquid metal with retention of its shape and with an at least partial reaction of the carbon component of the matrix of the C/C body with the metal occurring to form carbides.

3. The process as claimed in claim 1, wherein
- in the fourth step the composition comprising fiber material is cured by heating to a temperature of from 120 °C to 280 °C.

4. The process as claimed in claim 1, wherein the third and fourth steps are carried out simultaneously or partly overlapping in time.

5. The process as claimed in claim 1, wherein the cores have three layers and the thicknesses of the outer layers are each from 10 to 40 % of the total thickness of the core in the pressing direction and the thickness of the inner layer is from 20 to 80 % of the total thickness.

6. The process as claimed in claim 1, wherein the compressible outer layers are compressed to from 1/10 to 1/200 of their original thickness during pressing.

7. The process as claimed in claim 1, wherein the outer layers of the cores are melted during pressing.

8. A hollow body comprising fiber-reinforced ceramic material obtainable by the process of claim 1 in the form of an annular disk in which at least one hollow space extends from the periphery to the inner edge of the annular disk.

9. The use of a hollow body as claimed in claim 8 as brake or clutch disk.

## Revendications

1. Procédé de fabrication de corps creux en matériaux céramiques renforcés par des fibres pour lequel,
- dans une première étape, des noyaux compressibles sont fabriqués, dont la forme correspond au moins dans le plan perpendiculairement au sens de compression essentiellement à la géométrie des espaces creux à former,
- dans une deuxième étape, un corps vert est fabriqué en remplissant dans un moule les noyaux compressibles cités et une masse compressible contenant des liants et de la matière fibreuse,
- dans une troisième étape, la masse contenant la matière fibreuse est comprimée, le noyau étant comprimé au moins dans le sens de compression d'au moins 5 % de son extension dans le sens de compression,
- dans une quatrième étape, la masse contenant de la matière fibreuse est durcie,
- dans une cinquième étape, le corps vert compacté, désigné aussi par corps préalable est carbonisé par l'échauffement dans une atmosphère non oxydante à une température comprise entre environ 750 et environ 1 100 °C pour former un corps C/C,
pour lequel les noyaux se composent d'un matériau qui est pyrolysé dans la cinquième étape ou au moins partiellement pyrolisé en réduisant son volume, et les noyaux présentent dans le sens de compression au moins trois couches, pour lequel la compressibilité des couches directement contiguës se distinguent les unes des autres et pour lequel la compressibilité de la couche intérieure est plus petite que celle des couches extérieures.

2. Procédé selon la revendication 1, **caractérisé en ce que** suite à la cinquième étape
- le corps C/C est infiltré dans la sixième étape en conservant sa forme avec un métal liquide, une réaction de la part de carbone de la matrice du corps C/C avec le métal se déroulant au moins en partie en formant des carbures.

3. Procédé selon la revendication 1, **caractérisé en ce que**
- dans la quatrième étape, la masse contenant de la matière fibreuse est durcie par une augmentation de la température de 120 à 280 °C.

4. Procédé selon la revendication 1, **caractérisé en ce que** les troisième et quatrième étapes sont réalisées en même temps ou se chevauchant en partie temporellement.

5. Procédé selon la revendication 1, **caractérisé en ce que** les noyaux présentent trois couches, les épaisseurs des couches extérieures représentant respectivement 10 à 40 % et celles des couches intérieures 20 à 80 % de l'épaisseur totale du noyau dans le sens de compression.

6. Procédé selon la revendication 1, **caractérisé en ce que** lors de la compression, les couches extérieures compressibles sont comprimées entre 1/10^{e} et 1/200^{e} de leur épaisseur d'origine.

7. Procédé selon la revendication 1, **caractérisé en ce que** les couches extérieures des noyaux sont fondues lors de la compression.

8. Corps creux en matériau céramique renforcé par des fibres réalisable selon le procédé de la revendication 1 sous la forme d'un disque annulaire, pour lequel au moins un espace creux s'étend de la périphérie jusqu'au bord intérieur du disque annulaire.

9. Utilisation de corps creux selon la revendication 8 comme disque de freinage ou d'embrayage.
